# EUROPEAN PATENT APPLICATION

(11) **EP 0 908 751 A2**
(43) Date of publication of application: **14.04.1999**
(21) Application number: 98307816.3
(22) Date of filing: 25.09.1998
(51) Int. Cl.: G02B 21/36, G02B 23/12

(54) **Digital type optical instrument**

(30) Priority: 08.10.1997 JP 8943/97 U
(71) Applicant: Inabata & Co., Ltd., Osaka-shi, Osaka (JP)
(72) Inventor: Isono, Kunio, Tokyo (JP)
(74) Representative: Nettleton, John Victor

(57) **Abstract**

An optical instrument such as a microscope or a telescope that allows not only an observation of the image of an object but also a recording of such image, including an image pick-up element (6) which receives image light from an objective lens (2) mounted on one end portion of a tubular member of the optical instrument, a signal processor (13) which performs image signal formation and recording of the image on a memory by digitally processing the output of the image pick-up element, and a display (14) which shows images based upon the signals received from the signal processor.

## Description

### BACKGROUND OF THE INVENTION

### 1. Field of the Invention

The present invention relates to a digital type optical instrument and more particularly, but not exclusively, to a digital type microscope and telescope which are used for the purposes of research and teaching purposes, etc.

### 2. Prior Art

Conventionally, in the observation of objects using optical microscopes such as biological microscopes and microscopes used for metals, etc., a direct optical image is viewed by looking through left and right ocular lenses (or eyepieces). However, in this type of observation, the observed images cannot be recorded; and it is difficult to obtain good images through two ocular lenses unless the observer is well experienced. In addition, since such a system causes severe eye fatigue, long-term observation is difficult. These problems occur in telescopes too when used in outdoor activities, etc.

One method to solve such problems is the use of a CCD (charge-coupled device) camera. In this method, a CCD camera is connected to the body tube (or lens tube) of an optical microscope or the main tube of a telescope via a camera mount adapter (called "C mount adapter"), so that an image of the object being observed is displayed on a CRT (cathode ray tube) display; and such a displayed image is recorded on an external recording medium such as a video deck, etc. This method has advantages. Not only is recording of the observed images possible, but also there is little eye fatigue even in the case of prolonged observation, since the observer does not need to look through ocular lenses.

However, since the CCD camera which is currently used in the method above is generally an analog type, the recorded images cannot be characterized as having high quality, and details of the images tend to be unclear. In such a case, it is still possible to record high quality images by digitally processing the video signals and inputting these signals into a digital device such as a computer, etc. However, recording by such a method requires the input of video signals from the CCD camera into the computer using an image input board (video capture board), etc. that converts analog signals into digital signals.

Furthermore, in the method above, a CCD camera, a C mount adapter, a CRT display and cables for connecting these parts are required in addition to the optical microscope or telescope itself. This causes another problem. The wiring work is complicated, and the installation area occupied by such devices increases because of the size of the CRT display.

### SUMMARY OF THE INVENTION

Accordingly, the object of the present invention is to provide an optical instrument such as a microscope, telescope, or the like which is compact, which allows the recording of images by way of digital signals without any need for connection to external devices, and which prevents eye fatigue even in the case of prolonged observation.

The object is accomplished by a unique structure of the present invention for an optical instrurnent that includes an image pick-up element for receiving image light from an objective lens, a signal processing means for forming video signals and recording images by digitally processing the output of the image pick-up element, and an image display means for displaying images based on the signals from the signal processing means.

More specifically, in the present invention, with the image display means and signal processing means, etc. integrally built into the optical instrument (microscope or telescope), the image recording by digital signals can be accomplished without any need for connection to an external device, and objects can be observed without looking through ocular lenses. Furthermore, since the output of the image pick-up element is digitally processed, data can be inputted via a built-in external output terminal into a computer via a serial cable, etc. without any need to use a video capture board, rendering the image processing easy.

### BRIEF DESCRIPTION OF THE DRAWINGS

Figure 1 is a structural diagram illustrating one embodiment of the optical microscope according to the present invention;
Figure 2 is a block diagram representing the circuit construction of the signal processing means;
Figure 3 is a perspective view of another embodiment of the optical microscope according to the present invention; and
Figure 4 is a structural diagram illustrating one embodiment of the optical telescope according to the present invention.

### DETAILED DESCRIPTION OF THE INVENTION

In the following description, the term "telescope" is not limited to single-eyepiece type telescopes but also includes binoculars. Furthermore, image display devices employed in the present invention include CRT displays, liquid crystal displays (LCD's), or the like; however, it is desirable to use LCD's, which are thin and light in weight, and thus make it possible to construct a compact microscope. In addition, the image pick-up device used in the invention includes CCD's, photo diode arrays, or the like. Furthermore, an A/D converter, flash memory, CPU, image processing IC or the like can be used as the signal processing means employed in the present invention.

In the optical observation instrument of the present invention, it is sufficient as long as an object can be observed using the above-described image display means; and it is not necessary to observe the object with ocular lenses. However, an image display means such as an LCD, etc., is generally inferior in terms of resolution of the object and color reproduction characteristics compared to direct observation through the ocular lenses. Accordingly, by way of designing a direct observation through ocular lenses to be possible, the optical instrument of the present invention can be used in a wider range of applications, e. g., in research requiring detailed observations.

Accordingly, in the present invention, the microscope or telescope is equipped with: a body tube or main tube which has two light paths as light paths from an objective lens; a light path switching means which can introduce image light from the objective lens into one or both of the light paths; and an ocular observation means which is provided on one of the light paths, with the image pick-up means being provided on the other light path. Thus, by providing two light paths in the body tube or main tube and installing a light path switching means at the branching point of such light paths, it is possible to observe objects by means of the ocular lenses and/or the image display means. Here, the term "ocular observation means" refers to those elements which allow the observation of optical images by means of ocular lenses, and it includes focusing lenses, ocular lenses or the like.

In the optical microscope of the present invention, an illumination means such as transmitted illumination, falling illumination, etc. of the type used in conventional devices may be used in order to obtain image light from the object of observation. However, image pick-up elements such as CCD's, etc. generally have a low tolerance for exposure, and as the magnification of the observed image increases, the quantity of light incident on the objective lens is reduced, resulting in that there is a danger that the image on the image display means will become dark and indistinct.

Accordingly, in the present invention, a ring-form illuminating means which emits light toward the objective lens is installed on the inner circumference of the lower portion of the body tube of the microscope in addition to a conventional illuminating means. With the illuminating means which emits light toward the objective lens, illuminating light can be concentrated on the object of observation, and therefore, even in the case of images observed at a high magnification, image light with a high luminous intensity can be obtained. Furthermore, with the use of ring-form illumination, the illuminating light emitted onto the surface of the object is obtained as uniform light which is free of irregularities in lightness and darkness; accordingly, a clear image without shadows can be obtained. The ring-form illuminating means may be covered with an appropriate cap member in order to prevent the direct entry of light into the image pick-up element or ocular lens.

Universally known light sources can be used without any particular restrictions as the light source of the illuminating means of the present invention. However, white incandescent light such as halogen light generates heat that causes a danger that objects which have a low heat resistance can be damaged by the heat, and dimensional changes may occur because of the heat while the dimensions of an object to be observed are being measured. For such reasons, it is desirable to use light-emitting diodes which do not generate heat. By lining up a plurality of light-emitting diodes on the inner circumference of the body tube of the microscope, illumination with a sufficient luminous intensity can be provided.

Furthermore, a controller may be installed in the signal processing means so that the controller receives output signals from the image pick-up element and calculates light quantities and then controls, in accordance with the light quantities, the quantity of light emitted by the illuminating means. With the use of this controller, image light with a fixed luminous intensity can be obtained even in cases where the magnification ratio of observation, etc. changes; and there is no danger of insufficient light when images are being recorded.

The present invention will be descnbed below in further detail. Since the optical microscope and telescope of the present invention have the same basic construction, the following description will be made only on the optical microscope.

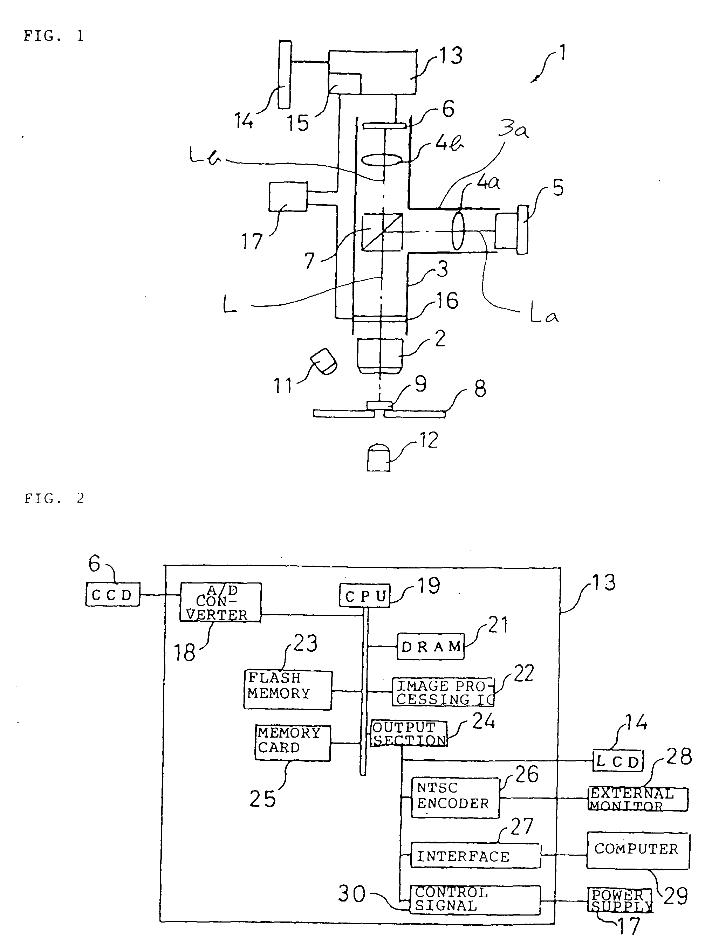

Figure 1 is a structural diagram of one embodiment of the digital type optical microscope of the present invention.

This optical microscope 1 includes a body tube (or lens tube) 3 with an objective lens 2 provided at one end thereof. The body tube 3 has a branch tube 3a so that the tube 3 has a shape in which the light path L from the objective lens 2 branches, by way of a beam splitter 7, into two light paths La and Lb at about an intermediate point with reference to the length of the tube 3. A focusing lens 4a is installed inside the branch tube 3a and an ocular lens 5 is mounted at the end of the branch tube 3a. These lenses 4a and 5 are installed as an ocular observation means so as to be on one of the branching light paths (La) that passes through the branch tube 3a. On the other hand, a CCD (charge-coupled device) 6 is installed in the body tube 3 along with another focusing lens 4b so as to be on the other light path (Lb).

An image processing means 13 is connected to the CCD 6, and an LCD (liquid crystal display) 14 is connected to the image processing means 13. The reference numeral 15 is a control unit which is a part of the image processing means 13, and the reference numeral 16 is an illuminating means provided inside the lower portion of the body tube 3.

The beam splitter 7 is installed in the body tube 3 so as to be at the light path branching point in the body tube 3 so that image light L from the objective lens 2 can be branched into two light paths La and Lb substantially at right angles.

The reference numeral 8 is a stage provided under the objective lens 2 so that an object 9 which is to be observed is placed thereon.

Illuminating means such as falling illumination 11 and transmitted illumination 12, etc. are installed around the stage 8 so that they can put the light on the object 9. It is designed so that the respective illuminating means are independently controlled to be used in accordance with the intended purposes.

With the structure above, the image light L from the object 9 of observation passes through the objective lens 2, beam splitter 7 and focusing lenses 4a and 4b and is focused on the ocular lens 5 and on the CCD 6. The image focused on the CCD 6 is outputted as an electrical signal and is digitally processed by the image processing means 13 and then displayed on the LCD 14. In this case, the control unit 15 of the signal processing means 13 calculates the quantity of light on the basis of the electrical signal received from the CCD 6 and then outputs, in accordance with the quantity of such a light, a signal which controls the power supply 17 for the illuminating means 16, thus controlling the amount of light emitted by the illuminating means 16. Typically, the illuminating means 16 is comprised of a plurality of light-emitting diodes arranged in the form of a ring on the inner circumferential surface of the lower portion of the body tube 3. Thus, even if the conditions of observation vary, a clear image with a constant luminous intensity can be displayed on the LCD 14.

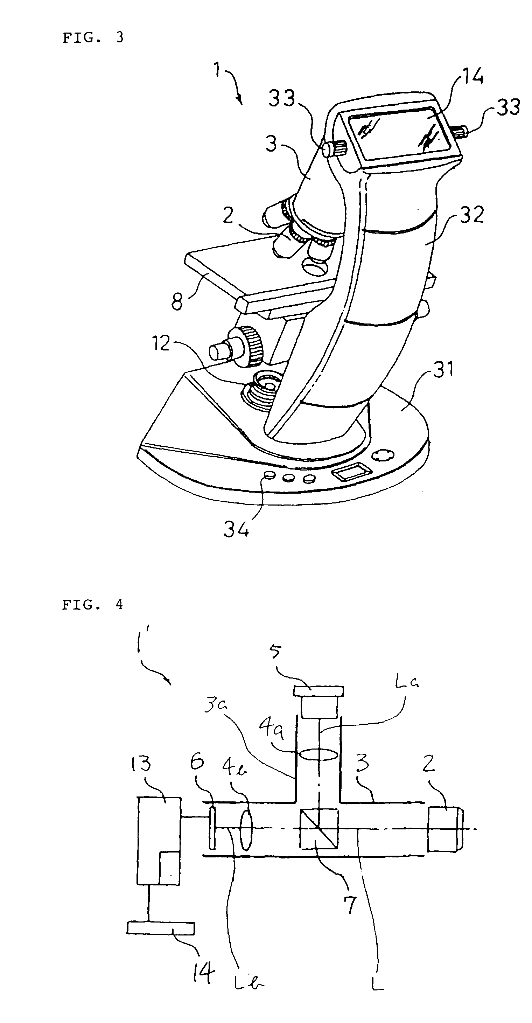

Figure 2 shows a block diagram of the circuit construction of the signal processing means 13 shown in Figure 1.

The signal processing means 13 includes an A/D converter 18 linked to the CCD 6, a DRAM (Dynamic Random Access Memory) 21, an image processing IC 22, a flash memory 23 and an output section 24 which are connected to the CPU 19. Images of the object 9 to be observed are displayed on the LCD 14 in accordance with signals from the output section 24. Desired images are recorded in the flash memory 23 and can also be recorded on a recording medium such as a memory card 25.

The CPU (central processing unit) 19, DRAM (Dynamic Random Access Memory) 21 and image processing IC (integrated circuit) 22 of the signal processing means 13 also function as the control unit 15 which controls the quantity of light emitted by the illuminating means 16 as described above. The control unit 15 calculates the quantity of light based on the signal from the CCD 6, compares this quantity of light with a light quantity value which is inputted beforehand, and, in cases where this quantity of light is smaller than the inputted value, outputs a signal which controls the quantity of light emitted by the illuminating means 16 so that the quantity of image light received by the CCD 6 equals to the previously inputted light quantity value. The light quantity value that is inputted beforehand can be set using a keyboard, or the quantity of light at the time of the previous imaging can be stored in the memory and used.

The output section 24 has a function of outputting signals from the signal processing means 13 to the LCD 14, a function of transmitting image data to external devices, and a function of outputting a control signal 30 that controls the output of the power supply 17 for the illuminating means 16. This output unit 24 is equipped with an NTSC (National Television System Committee) encoder 26 and an interface 27, etc. so as to transmit an image data. The output of the NTSC encoder 26 is inputted into an external monitor 28 via a connecting cable, so that images can be displayed on the monitor 28. This is especially advantageous when there are a large number of observers. The output of the output unit 24 can be transferred to a computer 29 through the interface 27 via a serial cable, etc., so that image recording, complex image processing and numerical calculations, etc. can be performed by the computer 29.

In Figures 1 and 2, if the controller 15, power supply 17, illuminating means 11, 12 and 16 and illumination power supply control signal 30 are eliminated, and the element referred to by the reference numeral 3 is replaced with a main tube, then Figures 1 and 2 show the structural diagram and block diagram for a telescope. Figure 4 illustrates one example of telescope 1' in accordance with the present invention

Figure 3 illustrates another embodiment of the optical microscope of the present invention.

This digital type optical microscope 1 is a biological microscope type and is equipped with a base 31, an arm 32 installed upright on the base 31, a body tube 3 provided on the arm 32 and contains a focusing lens 4 and CCD 6 (both not shown) in the upper portion thereof, a signal processing means 13 (not shown) which digitally processes the output of the CCD 6, an LCD 14 which is provided on the arm 32 so as to display images formed on the basis of signals from the signal processing means 13, and objective lenses 2 of different magnifications which are attached to the lower portion of the body tube 3. An object 9 to be observed is placed on the stage 8, and image light is introduced into the body tube 3 by the transmitted illumination 12 which is installed in the base 31 so as to be under the stage 8.

Tilt handles 33 are attached to the LCD 14 which displays images. Thus, the observer can insure favorable image observation by adjusting the angle of inclination of the screen of the LCD 14 via the tilt handles 33 so as to match the observing position of the observer. The reference numeral 34 refers to a shutter button which is installed in the base 31 so as to be used when recording the images. Images can easily be recorded merely by pressing this button 34.

Ocular observation members are not included in the optical microscope 1 shown in Figure 3. Instead, the microscope in Figure 3 includes an LCD 14 only so that observation is performed by way of the images displayed on the LCD 14. Accordingly, this microscope can be preferably used for prolonged observation or for observation of biological organisms in outdoor activities, etc.

As is clear from the above description, the optical microscope or telescope of the present invention is integrally equipped with an image pick-up means, a signal processing means and an image display means. Accordingly, image recording by way of digital signals can be accomplished in a compact device without connecting to external devices. In addition, since the objects can be observed via the image display means, it is possible to avoid eye fatigue. The telescope of the present invention is superior in terms of portability and is extremely suitable for use in outdoor activities such as bird-watching, etc.

Furthermore, with the optical microscope or telescope of the present invention that includes an ocular observation means, it is possible to accomplish the observation of images through both or either one of an ocular lens and an image display means. Accordingly, for important areas, fine details can be observed via an ocular lens, and thus it is possible to realize a wider range of applications of the microscope or telescope of the present invention.

Furthermore, with a ring-form illuminating means installed on the inner circumference of the lower portion of the body tube in the optical microscope of the present invention, there is no danger that images observed under high magnification have an insufficient amount of light. Moreover, with the use of light-emitting diodes as a light source, it is possible to prevent damages caused by the heat.

## Claims

1. A digital optical microscope characterized in that said microscope is comprised of: an image pick-up element which receives image light from an objective lens, a signal processing means which performs video signal formation and image recording by digitally processing an output of said image pick-up element, and an image display means which displays images based upon signals from said signal processing means.

2. A digital telescope characterized in that said telescope is comprised of: an image pick-up element which receives image light from an objective lens, a signal processing means which performs video signal formation and image recording by digitally processing an output of said image pick-up element, and an image display means which displays images based upon signals from said signal processing means.

3. A digital optical microscope characterized in that said microscope is comprised of:
a body tube which has two light paths for a light from an objective lens,
a light path switching means which introduces image light from said objective lens into one or both of said two light paths,
ocular observation means provided on one of said two light paths,
an image pick-up element provided on another of said two light paths,
a signal processing means which performs video signal formation and image recording by digitally processing an output of said image pick-up element, and
an image display means which displays images based upon signals from said signal processing means, and
wherein objects can be observed by means of an ocular lens and/or said image display means.

4. A digital telescope characterized in that said telescope is integrally comprised of:
a main tube which has two light paths for a light from an objective lens,
a light path switching means which introduces image light from said objective lens into one or both of said two light paths,
ocular observation means provided on one of said two light paths,
an image pick-up element provided on another of said two light paths,
a signal processing means which performs video signal formation and image recording by digitally processing an output of said image pick-up element, and
an image display means which displays images based upon signals from said signal processing means, and
wherein objects can be observed by means of an ocular lens and/or said image display means.

5. A digital type optical microscope according to Claim 1 or 3, further comprising a ring-form illuminating means which emits light toward said objective lens, said illuminating means being installed on an inner circumference of a lower portion of said body tube in which said objective lens is provided.

6. A digital type optical microscope according to Claim 5, wherein said illuminating means is comprised of a plurality of light-emitting diodes arranged in the form of a ring.

7. A digital type optical microscope according to Claim 5, wherein said signal processing means is provided with a control unit for receiving output signals from said image pick-up means and calculating light quantities, and further controlling an amount of light emitted by said illuminating means in accordance with said light quantities.

8. A digital type optical microscope according to Claim 6, wherein said signal processing means is provided with a control unit for receiving output signals from said image pick-up means and calculating light quantities, and further controlling an amount of light emitted by said illuminating means in accordance with said light quantities.

9. An optical observation instrument comprising:
a tubular member having a branch tube with an axis thereof extending at substantially right angles relative to an axis of said tubular member, said tubular member being provided with an objective lens at one end thereof;
a light path switching means provided inside said tubular member so as to introduce an image from said objective lens into another end of said tubular member and into said branch tube;
an ocular observation means provided at one end of said branch tube;
an image pick-up element provided at said another end of said tubular member;
a signal processing means connected to said image pick-up element so as to perform an image signal formation and an image recording by digitally processing an output of said image pick-up element; and
an image display means connected to said image processing means so as to display images based upon signals from said signal processing means.
